# FASCICULE DE BREVET EUROPEEN

(11) **EP 1 516 836 B1**
(45) Date de publication et mention de la délivrance du brevet: **16.07.2008**
(21) Numéro de dépôt: 04300595.8
(22) Date de dépôt: 13.09.2004
(51) Int. Cl.: B65G 65/46

(54) **Dispositif de vidange d'un silo à fond sensiblement plat**
Vorrichtung zum Entleeren von einem einen flachen Boden aufweisendem Silo
Emptying device for a flat-bottomed silo

(30) Priorité: 16.09.2003 FR 0350546
(43) Date de publication de la demande: 23.03.2005
(73) Titulaire: Etablissements DENIS, 28160 Brou (FR)
(72) Inventeur: Lizambard, Stéphane, 28160 Brou (FR)
(74) Mandataire: Fosse, Danièle

(56) Documents cités:
- FR-A- 2 517 285
- US-A- 2 037 959
- US-A- 4 619 577
- US-A- 4 875 820
- US-A- 5 960 932
- US-B1- 6 254 329

## Description

L'invention concerne un dispositif de nettoyage de silo à fond sensiblement plat destiné à stocker des grains s'écoulant naturellement par gravité, et plus précisément un dispositif de nettoyage de ce fond après que l'extraction du produit stocké ait été réalisée, dans un premier temps par ladite gravité.

Elle s'applique plus particulièrement aux silos stockant des grains de blé, maïs, colza, soja, tournesol, orge, riz, sorgho, pois, etc., que l'on dénommera ci-après, dans un but de simplification, "produit".

Dans ce cadre d'application, il est bien connu de recourir à des silos comprenant une enceinte interne à parois sensiblement verticales et à fond également sensiblement plat. Le fond comporte une ouverture centrale permettant une extraction du produit stocké vers le bas par le simple effet de la gravité.

L'extraction par gravité avec une ouverture centrale dans le fond sensiblement plat du silo crée un volume de produit résiduel limité par la paroi généralement cylindrique du silo, le fond et une surface conique dont la pente correspond à l'angle limite d'écoulement naturel du produit stocké.

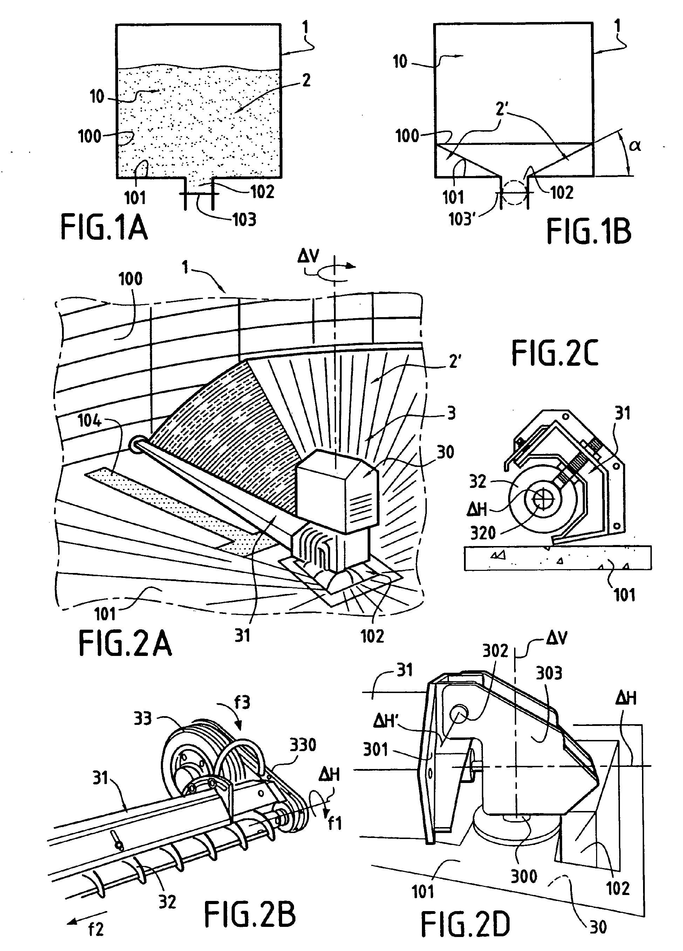

Les figures 1A et 1B placées en fin de la présente description illustrent très schématiquement un exemple de silo 1 en coupe longitudinale, plein (figure 1A) et vidé par gravité (figure 1B).

Le silo 1 comprend une enceinte interne 10 délimitée en périphérie par une paroi 100, à priori cylindrique, et en zone inférieure, par un fond sensiblement plat 101. Ce fond 101 est pourvu d'un orifice central 102 communiquant avec le milieu extérieur. Cet orifice 102 est associé à une vanne de fermeture 103, représentée en position fermée sur la figure 1A et ouverte (position 103') sur la figure 1B.

Sur la figure 1A le silo est rempli de produit 2 : grains de blé ou autre. Lorsqu'on ouvre la vanne 103 (position 103'), le grain 2 s'échappe par l'orifice central 102 sous l'effet de la gravité. Mais il reste toujours un volume résiduel de grain 2' autour de cet orifice central 102 qui prend la forme d'un anneau à surface conique. L'angle d'inclinaison α par rapport au plan du fond 101 correspond à l'angle limite d'écoulement naturel du grain 2'.

Si le silo 1 est destiné au stockage d'un même produit, cet état de fait peut, dans certaines circonstances, être toléré. Cependant, le mélange avec un nouvel arrivage de produit plus frais peut poser problème et, en tout état de cause, si un produit différent doit être stocké, il est nécessaire de vider complètement le silo 1 et d'en nettoyer le fond 101.

Pour évacuer ce volume de produit résiduel 2', il est connu de faire appel à des dispositifs comprenant une vis de vidange dite "intégrale". Pour fixer les idées, et à titre d'exemple non limitatif, de tels dispositifs sont mis dans le commerce par la Demanderesse, sous la références commerciale "Vis de Vidange intégrale", Versions "BM" ou "D".

Les figures 2A à 2D placées en fin de la présente description illustrent très schématiquement un exemple d'un tel dispositif et son mode de fonctionnement. Sur ces figures, les éléments identiques portent les mêmes références et ne seront re-décrits qu'en tant que de besoin.

Le dispositif à "vis de vidange intégrale", référencé 3, est constitué principalement d'une poutre 31 et d'une vis sans fin 32 (figures 2B et 2C). le dispositif 3 est monté en rotation par rapport à un axe vertical ΔV situé au centre du silo 1. Il est destiné à évacuer radialement et continûment le produit résiduel 2' dans une trémie 102 située à proximité immédiate de cet axe vertical central ΔV.

La figure 2A illustre partiellement, en vue de trois quarts haut, le fond du silo 1 et le volume résiduel de produit 2', de forme conique, en cours d'extraction finale par mise en oeuvre du dispositif 3.

L'organe de motorisation 30 a pour fonction de mettre en rotation la vis sans fin 32, par l'intermédiaire d'un renvoi d'angle (non représenté), autour d'un axe horizontal ΔH, longitudinal à la poutre 31, comme illustré plus particulièrement par la figure 2B (vue partielle dans l'espace de l'extrémité de la poutre 31) ou la figure 2C (qui est vue en coupe, de côté, de cette même poutre 31 et de la vis sans fin 32). La rotation s'effectue, dans l'exemple illustré, dans le sens des aiguilles d'une montre : flèche *f*1, par mise en rotation d'un arbre d'entraînement 320 de la vis sans fin 32. Il s'ensuit que le produit résiduel 2' est intercepté par la vis sans fin 32 et refoulé vers le centre (flèche f2), parallèlement à l'axe ΔH, pour tomber dans la trémie centrale 102.

Compte tenu des dimensions (rayon de l'enceinte circulaire du silo 1), il est nécessaire de faire reposer l'extrémité de la poutre 31 sur une roue 33, voire des roues intermédiaires (non représentées). Avantageusement, cette roue d'extrémité 33 participe à l'entraînement en rotation de la poutre 31 autour de l'axe ΔV dans le sens des aiguilles d'une montre. Il suffit de prévoir des organes 330 de couplage (dans l'exemple un boîtier de réduction de vitesse) à l'arbre de rotation 320 de la vis sans fin 32. Lorsque la roue 33 tourne (flèche *f*3), elle pousse l'extrémité de la poutre 31. Celle-ci décrit donc un cercle de rayon sensiblement égal à celui de la paroi cylindrique 100 du silo 1.

D'autres organes sont prévus, mais non explicitement représentés (limiteur de couple, etc.). On se reportera avec profit, pour une description plus détaillée aux brochures techniques du dispositif précité "Vis de Vidange intégrale", Versions "BM" ou "D".

On pourrait penser que la mise en oeuvre de ce dispositif résout entièrement le problème de l'extraction automatique du produit résiduel 2' après la phase d'extraction gravitaire.

En effet, théoriquement, lorsque le dispositif 3 a effectué une rotation complète de 360° autour de l'axe ΔV, tout le produit résiduel 2' a été transporté vers la trémie 102 et extrait du silo 1 via la trémie centrale 102.

Cependant, il n'est pas possible d'obtenir, du moins économiquement, un fond de silo 101 parfaitement plat. Il s'ensuit que, dans la pratique, le fond de silo 101 présente toujours des imperfections de planéité et/ou des parties saillantes telles, par exemple, des grilles de ventilation 104 (figure 2A), de façon générale, des variations de niveau.

La poutre 31 étant rigide, il s'ensuit qu'il est nécessaire de prévoir un jeu pour éviter tout risque de blocage et lui permettre une rotation complète de autour de l'axe central vertical ΔV.

Pour ce faire, on peut prévoir, comme illustré plus particulièrement par la figure 2D, un organe d'articulation de la poutre 31.

Dans le mode de réalisation représenté sur la figure 2D, l'organe de motorisation 30 proprement dit est disposé sous la paroi de fond 101. Il entraîne notamment en rotation la vis sans fin 32 par l'intermédiaire d'un renvoi d'angle dont la base inférieure 300 sert d'appui central à la vis de vidange intégrale sur la paroi de fond 101 et de pivot de rotation de la poutre autour de l'axe ΔV. Une première paire de pièces latérales 303, assujettie à un renvoi d'angle (non représenté), supportent un arbre 302 en rotation libre autour d'un axe horizontal ΔH', orthogonal à l'axe ΔH. La poutre 31 est assujettie à l'arbre 302, par une deuxième paire de pièces latérales de support 301. De ce fait, elle peut osciller autour de l'axe ΔH' et accommoder des irrégularités de surface de la paroi de fond 101.

Cependant, ce jeu a pour conséquence qu'une couche de produit résiduelle stagne sur le fond 101 du silo 1. Avec cette technique de l'art connu, il est donc impossible d'éliminer complètement la couche résiduelle de produit sans avoir recours à une opération manuelle, à l'aide de pelles et de balais, par exemple. Une telle opération est longue, donc coûteuse pour les exploitants du site. En effet les volumes résiduels mis en jeu, compte tenu des dimensions habituelles des silos, restent importants.

Pour fixer les idées, la couche de produit résiduel à évacuer manuellement dans une cellule de silo 1 d'un diamètre typique de 28 mètres représente environ 25 tonnes.

En outre, l'opération implique la présence d'opérateurs humains en fond de cuve et doit être exécutée dans une atmosphère très poussiéreuse, donc pénible pour les exécutants et dangereuse pour la sécurité des sites classés selon des zones définies par des normes relatives aux installations de stockage de céréales.

Dans le document US 4 875 820 on décrit un dispositif de vidange d'un silo à fond sensiblement plat destiné à stocker un produit de type grains ou similaires, ledit silo comprenant sur une paroi de fond, dans une zone centrale, un orifice par lequel ledit produit est susceptible d'être vidé par écoulement gravitaire naturel lors d'une première phase d'extraction, en laissant sur ladite paroi de fond un premier volume résiduel dudit produit. Ledit silo est muni d'un dispositif de vidange en rotation autour d'un axe vertical passant par ladite zone centrale, balayant lors de ladite rotation ladite paroi de fond, de manière à intercepter et à transporter vers ledit orifice central l'essentiel dudit premier volume résiduel de produit, lors d'une deuxième phase d'extraction. De manière additionnelle, on propose de joindre une vis sans fin de balayage au dispositif de vidange. Cette vis sans fin de balayage est entraînée par l'interaction de pignons en même temps que la vis sans fin de vidange et est construite dans le sens opposé à celui de la vis sans fin de vidange. Les pignons garantissent que les deux vis sans fin tournent en sens opposé, entraînant le grain entre elles vers l'orifice central. La vis de vidange et la brosse ne peuvent, être séparées l'une de l'autre et sont le plus au contact l'une de l'autre, entraînées en rotation à la même vitesse de manière indexée l'une par rapport à l'autre par les pignons.

Le besoin se fait donc sentir de ne plus avoir à recourir à une opération manuelle pour extraire complètement le produit stocké et nettoyer entièrement le fond du silo de tout produit résiduel. Tout au contraire, le besoin se fait sentir de pouvoir obtenir un nettoyage entièrement automatique.

L'invention vise à pallier les inconvénients des dispositifs de l'art connu et à répondre aux besoins qui se font sentir, et dont certains viennent d'être rappelés.

L'invention se fixe pour but un dispositif de nettoyage automatique de la paroi de fond d'un silo, ce dernier étant du type à fond sensiblement plat et destiné à stocker des produits de type grains ou similaires susceptible d'être extraits par un écoulement naturel gravitaire.

Pour ce faire, selon une caractéristique importante, le dispositif comporte essentiellement une brosse spiralée ou, de façon plus générale, d'une raclette spiralée, munie d'un carénage de protection. Pour simplifier, cet élément sera appelé ci-après "brosse". La brosse est couplée mécaniquement à un dispositif de vidange à vis sans fin précité ou d'un dispositif similaire. Le dispositif de nettoyage est disposé à l'arrière du dispositif de vidange, par rapport au sens de rotation autour de l'axe vertical. De ce fait, la brosse intercepte et évacue le produit restant dans la même trémie centrale après le passage de la vis de vidange ou de tout autre organe en faisant fonction.

Dans un mode de réalisation préféré, la brosse est entraînée par l'organe de motorisation de la vis de vidange intégrale, par l'intermédiaire d'organes de transmission appropriés qui seront détaillés ci-après.

Le dispositif selon l'invention peut :
- être intégré à un dispositif nouveau du type à vidange intégrale au moment de sa fabrication ;
- être ajouté à un dispositif déjà existant du type à vidange intégrale ; ou
- être amovible : il est dans ce cas connecté à un dispositif déjà existant du type à vidange intégrale lors de son utilisation.

Dans les deux premiers cas, il reste en permanence dans le silo. Dans le troisième cas, il peut être démonté après utilisation et rangé dans un local technique approprié et, donc, ne pas rester en permanence dans le silo, ce qui représente un avantage certain.

L'invention a donc pour objet principal un dispositif de nettoyage d'un silo à fond sensiblement plat destiné à stocker un produit de type grains ou similaires, ledit silo comprenant sur une paroi de fond, dans une zone centrale, un orifice par lequel ledit produit est susceptible d'être vidé par écoulement gravitaire naturel lors d'une première phase d'extraction, en laissant sur ladite paroi de fond un premier volume résiduel dudit produit, ledit silo étant muni d'un dispositif de vidange en rotation autour d'un axe vertical passant par ladite zone centrale, balayant lors de ladite rotation ladite paroi de fond, de manière à intercepter et à transporter vers ledit orifice central l'essentiel dudit premier volume résiduel de produit, lors d'une deuxième phase d'extraction, laissant un deuxième volume résiduel, dit final, dudit produit sur ladite paroi de fond, caractérisé en ce qu'il est assujetti au dit dispositif de vidange, de manière à suivre ledit mouvement de rotation autour dudit axe vertical, en ce qu'il comprend un arbre supportant un raclette spiralée reposant sur ladite paroi de fond, en ce qu'il comprend des moyens de motorisation imprimant un mouvement de rotation dudit arbre support et de ladite raclette autour d'un axe sensiblement horizontal, en ce que le sens de ladite rotation est tel que ladite raclette spiralée intercepte et expulse ledit deuxième volume résiduel de produit vers ledit orifice central, de manière à obtenir un nettoyage automatique de ladite paroi de fond et un extraction totale dudit produit, et en ce que ledit dispositif de vidange comprend un arbre d'entraînement assujetti au dit arbre support par des moyens mécaniques articulés, de manière à obtenir un découplage entre lesdits arbres.

L'invention va maintenant être décrite de façon plus détaillée en se référant aux dessins annexés, parmi lesquels :
- les figures 1A et 1B illustrent schématiquement l'état d'un silo plein de grains et l'état atteint lorsque ce grain a été extrait par le simple effet de la gravité, respectivement ;
- la figure 2A illustre partiellement, en vue de trois quarts hauts, un silo muni d'un dispositif de vidange de grains résiduels dit à "vis de vidange intégrale" selon l'art connu, et explicite le fonctionnement de ce dispositif ;
- les figures 2B à 2D illustrent schématiquement des détails de ce dispositif ;
- les figures 3A et 3B illustrent schématiquement dans l'espace, en vue de trois quarts hauts, un exemple de dispositif de nettoyage à raclette spiralée selon un mode de réalisation préférée de l'invention, sans carénage de protection et avec un tel carénage, respectivement ;
- la figure 3C est une figure de détail illustrant un palier intermédiaire utilisé dans le dispositif des figures 3A et 3B ;
- la figure 3D est une figure de détail illustrant un élément d'étanchéité disposé entre le dispositif de vidange des figures 2A à 2D et le dispositif de nettoyage selon l'invention ;
- la figure 3E est une figure de détail illustrant un élément de type balai linéaire disposé sur le carénage du dispositif de nettoyage selon l'invention ;
- la figure 3F est une figure de détail illustrant un boîtier de transmission couplant mécaniquement les arbres d'entraînement des dispositifs de vidange et de nettoyage ; et
- les figures 3G et 3H sont des figures de détail illustrant un système de transmission articulée reliant l'arbre d'entraînement de la raclette spiralée du dispositif de nettoyage à un arbre de sortie du boîtier de transmission de la figure 3F.

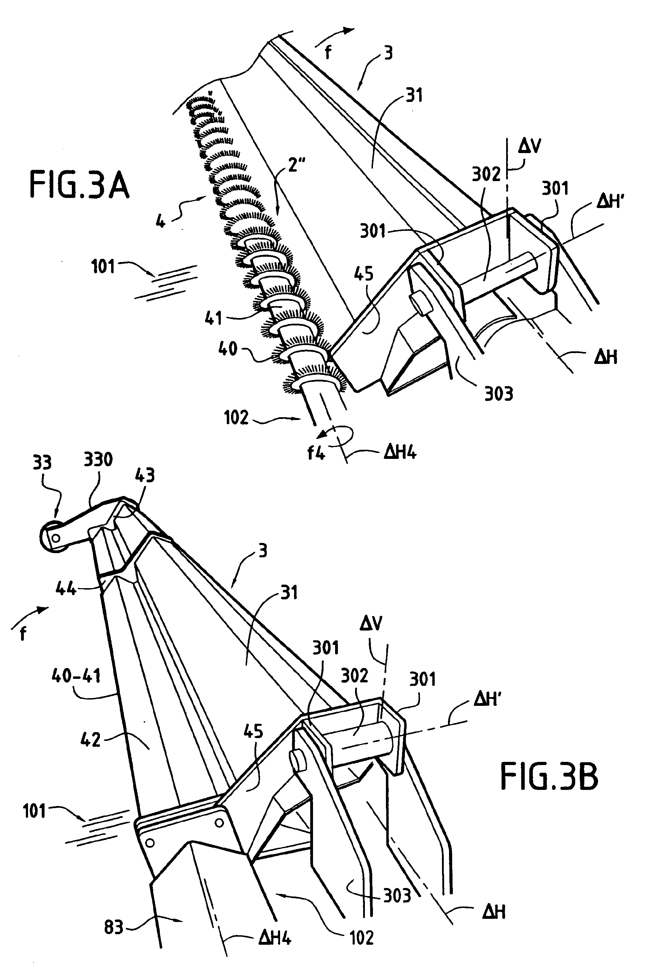

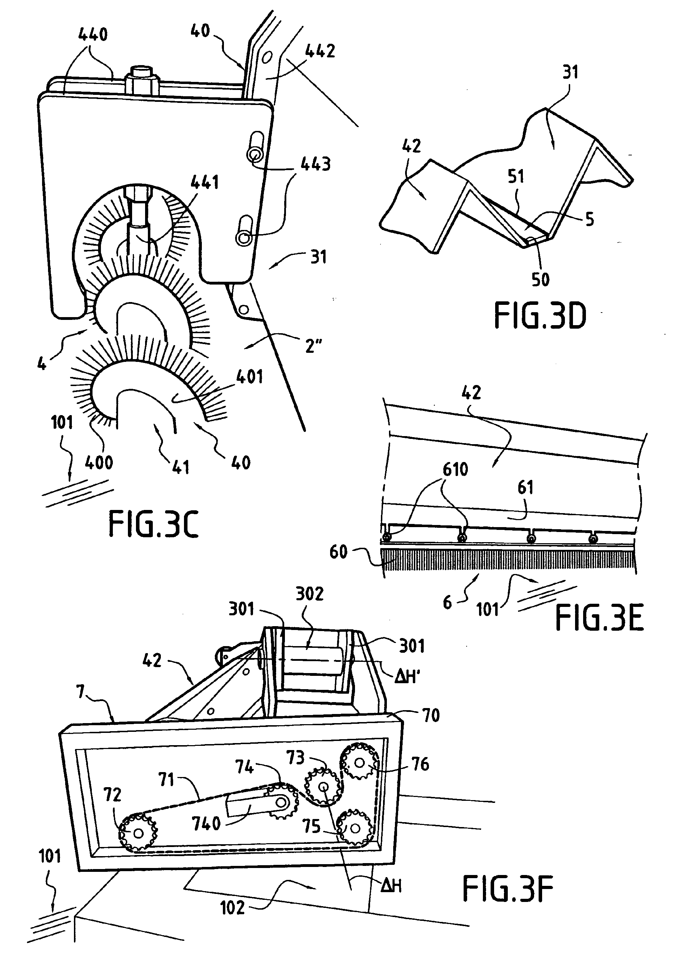

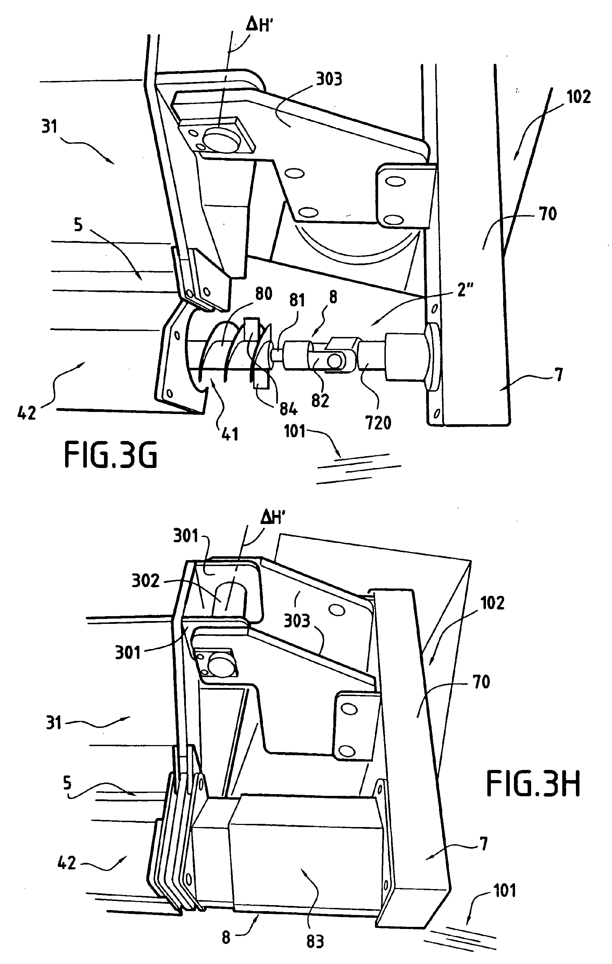

On va maintenant décrire un exemple de réalisation préférée du dispositif selon l'invention de nettoyage automatique de silo à fond sensiblement plat, destiné à stocker des produits de type grains ou similaires, susceptibles de s'écouler naturellement par gravitation, par référence aux figures 3A à 3H

Sur ces figures, les éléments identiques (ou identiques aux éléments des figures 1A à 2D) portent les mêmes références et ne seront re-décrits qu'en tant que de besoin.

La figure 3A illustre dans l'espace, en vue partielle de trois quarts haut, le dispositif de nettoyage proprement dit, référencé 4, non caréné, à savoir principalement une brosse spiralé 40 (ou de façon plus général, comme il a été indiqué, une raclette spiralée) portée par un arbre d'entraînement permettant une rotation autour d'un axe horizontal ΔH4 parallèle à l'axe de rotation ΔH de la vis sans fin 32 (figures 2B et 2C).

Le dispositif 4 est adossé à un dispositif du type à vis de vidange intégrale 3, qui peut être sinon identique du moins très similaire en soi avec le dispositif du type de l'art connu décrit sur les figures 2A à 2C. Seules quelques adaptations mineures sont nécessaires et seront précisées ci-après.

Il est donc inutile de re-décrire entièrement ni le fonctionnement, ni la configuration d'un tel dispositif.

Dans l'exemple décrit, l'organe de motorisation du dispositif à vis de vidange 3 n'est pas visible, car disposé en dessous de la paroi de fond 101. Cette configuration s'apparente à celle décrite en regard de la figure 2D.

On a représenté également sur la figure 3A l'organe d'articulation de la poutre 31 comprenant deux paires de supports latéraux, 301 et 303, et l'arbre 302 permettant une oscillation (rotation) autour de l'axe ΔH'.

Lors de son mouvement de rotation autour de l'axe vertical ΔV (flèche *f*), le dispositif de vidange 3 à vis sans fin 32 (figure 2B) intercepte la plus grande partie du volume de produit résiduel 2' (figure 2A) restant après l'extraction gravitaire naturelle et l'expulse vers la trémie centrale 102, précisément par l'intermédiaire de la vis sans fin 32 (figures 2B et 2C). Cependant, comme il a été indiqué précédemment, il subsiste une couche de produit résiduel que l'on appellera "final", désormais référencé 2", qui n'a pas été intercepté du fait des oscillations de la poutre 31 autour de l'axe ΔH', elles-mêmes conséquence de la non planéité de la paroi de fond 101. Ce produit résiduel final 2" se retrouve sur l'arrière de la vis sans fin 32.

Du fait de la présence du dispositif de nettoyage 4 conforme à l'invention, le produit résiduel 2" est intercepté par la brosse spiralée 40. Il est repoussé vers l'avant en considérant le sens d'avancement, la brosse spiralée 40 tournant en sens opposé (flèche *f*4) au sens d'avancement (flèche *f*). En tout état de cause, il est transporté simultanément vers la trémie centrale 102, toujours du fait de la rotation de la brosse spiralée 40 autour de l'axe ΔH4.

Il s'ensuit que, après une rotation complète du dispositif de nettoyage 4 conforme à l'invention, adossé au dispositif à vis de vidange intégrale 3, il ne subsiste plus de produit résiduel sur la paroi de fond 101 du silo 1 (figure 2A), pour le moins de façon significative.

On doit bien comprendre en effet que, d'une part la couche résiduelle 2" est de relativement faible épaisseur après passage du dispositif 3, d'autre part, même en présence d'oscillations de la poutre 31 (qui entraînent des oscillations de même ordre de grandeur du dispositif de nettoyage), ces oscillations sont de faibles amplitudes. Il s'ensuit qu'elles peuvent être absorbées par l'élasticité des poils de la brosse spiralée 40. Celle-ci repose donc en permanence sur la paroi de fond 101 du silo sur toute sa longueur et opère un nettoyage en continu.

La figure 3B est une représentation dans l'espace, en vue de trois-quarts haut illustrant de façon plus complète le système combiné regroupant le dispositif de vidange à vis sans fin 3 et le dispositif de nettoyage 4 à brosse spiralée 40 selon l'invention.

Ce système pouvant rester en permanence dans le silo 1, il convient dans la pratique de protéger la brosse spiralée 40 et son arbre d'entraînement 41, du produit stocké 2 (figure 1A) dans le silo 1. En effet, et notamment quand le silo 1 est plein, le produit 2 exerce une pression importante sur les organes disposés en fond de silo. Pour ce faire, on prévoit un carénage 42 formant une poutre rigide pour le dispositif de nettoyage à brosse spiralée 4 selon l'invention, de manière similaire à celle, 31, du dispositif de vidange à vis sans fin 3.

Ce carénage 42 est assujetti à la poutre 31 par divers moyens de fixations : flasque 45, dans une zone proche de l'extrémité centrale, une ou plusieurs pièces de support intermédiaire(s) 44 disposées le long de la poutre 42 et reliée(s) à la poutre 31. Le carénage 42 à la forme intérieure d'un "C" renversé.

On a représenté également, sur la figure 3B, la roue d'extrémité 33, commune désormais au dispositif du type à vis de vidange intégrale 3 et au dispositif de nettoyage automatique 4 à brosse spiralée 40. Comme il a déjà été indiqué, on peut prévoir des roues intermédiaires (non représentées), notamment si la longueur des poutres 31 et 42 est importante.

La figure 3C est une figure de détail illustrant de façon plus précise un exemple de réalisation d'un support intermédiaire 44. Il comprend une bride 442 assujettie à la poutre 31. Deux flasques latérales 440 lui sont fixées par tous moyens appropriés 443 (vissage, etc.). Entre ces flasques 440, formant supports, on dispose un palier intermédiaire 441 supportant à son tour l'arbre de rotation 41 de la brosse spiralée 40.

Sur cette figure 3C, la brosse spiralée 40 est représentée de façon plus détaillée. Elle comprend une armature centrale 401 constituée d'une vis sans fin avec pas à gauche, supportant, en périphérie, des poils flexibles ou, de façon plus générale, d'éléments souples, 400, en matériau compatible avec les applications envisagées (notamment avec la nature des produits stockés). La longueur des poils 400 et leur flexibilité sont déterminées notamment pour absorber les oscillations des deux poutres lors de leur rotation autour de l'axe Δ V (figures 3A et 3B), de manière que la brosse spiralée 40 reste constamment en contact avec la paroi de fond 101.

Comme il a été rappelé, et notamment lorsque le silo 1 est pratiquement vide après extraction gravitaire naturelle (figure 1B), l'atmosphère qui y règne est très poussiéreuse.

Dans un mode de réalisation préféré, on prévoit avantageusement un moyen d'étanchéité entre les deux poutres, 31 et 42.

Cette disposition est illustrée schématiquement par la figure de détail 3D. Ce moyen d'étanchéité se présente sous la forme d'un organe que l'on appellera "bavette d'étanchéité" 5 disposée entre les deux poutres, 31 et 42, et assujettie à celle-ci par l'intermédiaire de joints étanches, 50 et 51, respectivement.

Toujours dans un mode de réalisation préféré, on dispose avantageusement en partie inférieure de la poutre de nettoyage 42, dans une zone que l'on appellera arbitrairement "arrière", ce par rapport au sens de rotation de l'ensemble "dispositif 3 - dispositif 4", un organe de nettoyage auxiliaire à brosse linéaire (ou de façon plus générale une raclette linéaire) pour contenir le produit résiduel 2" (figure 3C) comblant l'espace entre la poutre de nettoyage 42 et la paroi de fond 101.

Une telle disposition est illustrée schématiquement par la figure 3E.

Cet organe 6 comprend une brosse linéaire 60 (de façon plus générale des éléments souples linéaires) et un profilé support 61, assujetti par tout moyen approprié (vissage, etc.) 610 à la paroi arrière de la poutre 42.

Toujours dans un mode de réalisation préféré, les moyens d'entraînement en rotation de l'arbre 41 (figures 3A ou 3C) de la brosse spiralée 40, c'est-à-dire de sa motorisation, sont dérivés de ceux propres au dispositif de vidange à vis de vidange intégrale 3, à l'aide d'organes de couplage mécaniques qui vont être précisés ci-après.

La figure 3F illustre ces moyens de couplage mécaniques 7, dans l'espace en vue arrière. Dans cet exemple de réalisation, comme il a été précisé, les moyens de motorisation proprement dits sont disposés dessous la paroi de fond 101 (voir figure 2D : 30).

Les moyens de couplage 7 comprennent un boîtier de transmission 70 assujetti aux deux poutres, 31 et 42. Le couplage mécanique s'effectue, pour l'arbre 320 (figure 2C) sur un premier axe de sortie du boîtier 7, par l'intermédiaire d'un mécanisme de renvoi d'angle et de l'engrenage 73. L'arbre 41 de la brosse spiralée 40 est entraîné dans le sens anti-horaire par l'engrenage 72 (la vis sans fin 32 de la vidange intégrale 3 étant entraînée dans le sens horaire), sur un deuxième axe de sortie du boîtier 7. Les deux engrenages sont couplés physiquement à l'aide d'une chaîne 71. Pour obtenir ces sens de rotation respectifs, on prévoit des engrenages intermédiaires : 74 à 76. l'engrenage 74 agit également comme tendeur de chaîne, à l'aide d'un organe tenseur 740.

Naturellement, on prévoit un couvercle et des moyens d'étanchéité (non représenté) pour refermer le boîtier de transmission 7.

On doit bien comprendre que ce boîtier de transmission 7 peut être remplacé par un autre moyen d'entraînement de la vis spiralée 40 : moto-réducteur, moteur hydraulique, etc., selon le dispositif de vis de vidange mis en oeuvre, qui peut différer de celui décrit par référence aux figures 2A à 2D sans sortir du cadre de l'invention.

Pour des raisons d'économie, il est préférable de mettre en oeuvre un moteur d'entraînement commun à la vis sans fin 31 et à la brosse spiralée 40. On peut cependant faire appel à deux moteurs indépendants, l'un pour entraîner la vis sans fin 32, l'autre pour entraîner la brosse spiralée 40. Cette solution sera notamment retenue lorsque "sous-ensemble" brosse amovible est du type amovible.

De façon pratique, le boîtier de transmission 7 n'est pas rendu solidaire de la poutre 31 du dispositif vidange 3 à vis sans fin 32, mais des pièces latérales, 303, supports de l'axe d'oscillation horizontal, 302, de la poutre 31 (voir figures 3A et 3B). La poutre 42 du dispositif de nettoyage 4 à brosse spiralée 40 étant elle-même assujettie de façon fixe à la poutre 31, il est nécessaire qu'elle puisse suivre les mouvements d'oscillation de cette dernière.

Pour ce faire, comme le montre plus particulièrement la figure de détail 3G, on prévoit un système 8 à transmission articulée reliant l'arbre 41 de la brosse spiralée de nettoyage 40 à l'arbre de sortie 720 du boîtier de transmission 7. Cet arbre de sortie 720 est mû en rotation par l'engrenage 72 (figure 3F). De façon avantageuse, la transmission articulée 82 est du type à la Cardan.

De par les dispositions décrites précédemment, la brosse spiralée et la vis sans fin ne sont pas en contact l'une avec l'autre et leurs vitesses respectives sont différentes, ou pour le moins rendues différentes en tant que de besoin.

La poutre 31 et le carénage 42 sont, pendant la phase de produit vers la trémie centrale 102, totalement indépendants et forment deux ensembles autonomes. Les seules liens sont constitués par des organes d'étanchéité et l'attelage de la poutre 31 entraînant en rotation autour de l'axe verticale ΔV le dispositif comprenant le carénage et la brosse spiralée 40.

L'arbre d'entraînement 41 de la brosse spiralée 40 est équipé, sur l'extrémité proche de l'articulation 82, d'un élément de filet 80 monté sur un arbre 81, prolongeant l'arbre 41 et mécaniquement assujetti à celui-ci. De façon avantageuse, on prévoit des palettes 84 ou tout autre moyen d'éjection similaire du produit résiduel final 2" vers la trémie d'évacuation 102, lorsque l'extrémité des arbres 41-81 sont en dehors de cette dernière.

De façon avantageuse encore, on prévoit des moyens de protection de cette articulation sous la forme d'un carter en tôle 83 qui la recouvre, ce qui permet de la protéger lors de la phase de vidange gravitaire, comme illustré de façon plus particulière par la figure 3H.

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 3A à 3H. Bien qu'il soit avantageux de dériver l'énergie mécanique à partir de celle nécessaire à l'actionnement du dispositif de vidange à vis sans fin, on pourrait prévoir, dans un mode de réalisation non explicitement décrit, des moyens de motorisation autonome. D'autre part, le dispositif de vidange utilisé après la phase d'extraction gravitaire, peut être d'un type autre que celui explicitement décrit, sans sortir du cadre de l'invention.

Il doit être clair également que le dispositif de nettoyage conforme à l'invention peut être intégré à un dispositif de vidange au moment de la fabrication en usine ou adjoint à un dispositif préexistant, moyennant des modifications *in situ* peu complexes, ou encore être amovible.

Enfin, les exemples numériques n'ont été fournis que pour mieux fixer les idées et ne sauraient constituer une quelconque limitation de la portée de l'invention. Ils procèdent d'un choix technologique à la portée de l'Homme de Métier.

## Revendications

1. Dispositif de nettoyage d'un silo (1) à fond sensiblement plat (101) destiné à stocker un produit de type grains ou similaires, ledit silo (1) comprenant sur une paroi de fond (101), dans une zone centrale, un orifice (102) par lequel ledit produit est susceptible d'être vidé par écoulement gravitaire naturel lors d'une première phase d'extraction, en laissant sur ladite paroi de fond (101) un premier volume résiduel (2') dudit produit, ledit silo (1) étant muni d'un dispositif de vidange (3) en rotation autour d'un axe vertical (ΔV) passant par ladite zone centrale, balayant lors de ladite rotation ladite paroi de fond (101), de manière à intercepter et à transporter vers ledit orifice central (102) l'essentiel dudit premier volume résiduel (2') de produit, lors d'une deuxième phase d'extraction, laissant un deuxième volume résiduel, dit final (2"), dudit produit sur ladite paroi de fond (101), assujetti au dit dispositif de vidange (3), de manière à suivre ledit mouvement de rotation autour dudit axe vertical (ΔV), ledit dispositif de vidange (3) comprenant un arbre (41) supportant une raclette spiralée (40) reposant sur ladite paroi de fond (101), et des moyens de motorisation imprimant un mouvement de rotation dudit arbre support (41) et de ladite raclette (40) autour d'un axe sensiblement horizontal (ΔH4), le sens de ladite rotation étant tel que ladite raclette spiralée (40) intercepte et expulse ledit deuxième volume résiduel de produit (2") vers ledit orifice central (102), de manière à obtenir un nettoyage automatique de ladite paroi de fond (101) et une extraction totale dudit produit (2"),
ledit dispositif de vidange (3) comprenant en outre un arbre d'entraînement (320) assujetti au dit arbre support (41) par des moyens mécaniques articulés (8), de manière à obtenir un découplage entre lesdits arbres (41, 320), ledit dispositif de nettoyage étant **caractérisé en ce que** la puissance nécessaire à la motorisation dudit arbre (41) supportant ladite raclette spiralée (40) et dudit arbre (320) supportant ladite vis sans fin (32) est obtenue de moyens de motorisation communs (30) et **en ce que** ces moyens de motorisation (30) sont couplés à un boîtier de transmission (7) permettant un couplage desdits arbres (41, 320) par l'intermédiaire d'un premier et d'un deuxième arbre de sortie (720) et d'un mécanisme de renvoi d'angle.

2. Dispositif selon la revendication 1, **caractérisé en ce que** ladite raclette spiralée (40) est constituée d'une armature centrale (401) en forme de vis sans fin enroulée autour dudit arbre support (41) et munie en périphérie d'éléments souples (400).

3. Dispositif selon les revendications 1 ou 2, **caractérisé en ce que** ledit dispositif de vidange (3) comprend ledit arbre d'entraînement (320) supportant une vis sans fin (32) et des moyens de motorisation (30) imprimant un mouvement de rotation à ladite vis sans fin (32) autour d'un axe sensiblement horizontal (ΔH), et **en ce que** ledit dispositif de vidange (3) comprend un carénage de protection enveloppant ladite vis sans fin (32) sur le dessus, ayant la forme générale d'un "C" renversé, et formant une première poutre rigide (31), ladite vis sans fin (32) interceptant et transportant vers ledit orifice central (102) l'essentiel dudit premier volume résiduel de produit (2'), lors de ladite deuxième phase d'extraction, laissant ledit deuxième volume résiduel final de produit (2") sur ladite paroi de fond (101), dans une zone dite de sortie par rapport au sens de ladite rotation autour dudit axe vertical (ΔV), de manière à ce que ce dit deuxième volume de produit résiduel (2") soit intercepté à son tour par ladite raclette spiralée (40).

4. Dispositif selon la revendication 3, **caractérisé en ce que** ledit arbre d'entraînement (41) supportant ladite raclette spiralée (40) est muni d'au moins un palier intermédiaire (441) assujetti mécaniquement à ladite première poutre rigide (31) par des pièces supports latérales (440) et une bride (442) entourant tout ou partie de ladite poutre rigide (31).

5. Dispositif selon la revendication 1, **caractérisé en ce que** ledit couplage est obtenu par l'intermédiaire d'une chaîne de transmission (71) et d'engrenages (72-76), lesdits engrenages (72-76) imprimant un mouvement dans le sens d'une montre au dit arbre d'entraînement (320) supportant ladite vis sans fin (32) et un mouvement anti-horaire au dit arbre d'entraînement (720) supportant ladite raclette spiralée (40).

6. Dispositif selon l'une quelconque des revendications 3 à 5, **caractérisé en ce qu'**il comprend également un carénage de protection enveloppant ladite raclette spiralé sur le dessus, ayant la forme générale d'un "C" renversé, et formant une deuxième poutre rigide (42), et **en ce que** lesdits carénages desdites première et deuxième poutres rigides (31, 42) sont reliés entre eux, dans une zone supérieure, par un élément d'étanchéité (5).

7. Dispositif selon la revendication 6, **caractérisé en ce que** ledit carénage de la dite deuxième poutre rigide (42) est muni, dans une zone inférieure, opposée à ladite première poutre rigide (31), dite de sortie par rapport au sens de ladite rotation autour dudit axe vertical (ΔV), d'un élément de nettoyage auxiliaire comprenant des éléments souples linéaires (6) balayant ladite paroi de fond (101) lors de ladite rotation autour de cet axe vertical (ΔV).

8. Dispositif selon l'une quelconque des revendications 3 à 7, **caractérisé en ce que** ladite première poutre (31) est munie, en une extrémité proche de ladite zone centrale, de moyens (301-303) permettant des oscillations autour d'un axe horizontal (ΔH'), de manière à pouvoir accommoder des variations de niveau de ladite paroi de fond (101) lors de ladite rotation autour dudit axe vertical (ΔV).

9. Dispositif selon la revendication 8, **caractérisé en ce que** lesdits moyens permettant des oscillations comprennent deux paires pièces supports latérales verticales (301-303) couplées par un arbre (302) permettant des rotations libres autour dudit axe horizontal (ΔH').

10. Dispositif selon la revendication 9, **caractérisé en ce que** ledit arbre d'entraînement (41) supportant ladite raclette spiralée (40) est couplé mécaniquement sur ledit deuxième arbre de sortie (720) dudit boîtier de transmission (7) par l'intermédiaire d'un élément de transmission articulé (8).

11. Dispositif selon la revendication 10, **caractérisé en ce que** ledit élément de transmission articulé est une transmission à la Cardan (8).

12. Dispositif selon la revendication 11, **caractérisé en ce que** l'extrémité proche de ladite zone centrale dudit arbre d'entraînement (41) supportant ladite raclette spiralée (40) est munie d'un élément à vis sans fin (80) muni de moyens d'éjection (84) dudit produit (2") dudit deuxième volume résiduel final vers ledit orifice centrai (102).

13. Dispositif selon l'une quelconque des revendications 10 à 12, **caractérisé en ce que** ledit élément de transmission articulé (8) est muni d'un carénage de protection (83) ayant la forme générale d'un "C" renversé.

## Claims

1. Device for cleaning a silo (1) having a more or less flat bottom (101) intended for storing a grain-type product or the like, the said silo (1) comprising on a bottom surface (101), in a central area, an orifice (102) through which the said product is able to be emptied by natural gravity flow during a first extraction phase, leaving a first residual volume (2') of the said product on the said bottom surface (101), the said silo (1) being fitted with an emptying device (3) which rotates about a vertical axis (ΔV) passing through the said central area and sweeps the said bottom surface (101) during the said rotation in such a way as to intercept and transport the bulk of the said first residual product volume (2') towards the said central orifice (102) during a second extraction phase, leaving a second residual volume, referred to as final (2"), of the said product on the said bottom surface (101), subjected to the said emptying device (3) in such a way as to follow the said rotational movement about the said vertical axis (ΔV), the said emptying device (3) comprising a shaft (41) bearing a spiral scraper (40) which rests on the said bottom surface (101), and motorization means which cause the said support shaft (41) and the said scraper (40) to rotate about an approximately horizontal axis (ΔH4), the direction of the said rotation being such that the said spiral scraper (40) intercepts and expels the said second residual product volume (2") towards the said central orifice (102) in such a way as to automatically clean the said bottom surface (101) and completely extract the said product (2"), the said emptying device (3) furthermore comprising a drive shaft (320) secured to the said support shaft (41) by articulated mechanical means (8) in such a way as to achieve decoupling of the said shafts (41, 320), the said cleaning device being **characterized in that** the power that is necessary to motorize the said shaft (41) bearing the said spiral scraper (40) and the said shaft (320) bearing the said worm (32) is obtained from common motorization means (30) and **in that** these motorization means (30) are coupled to a gearbox (7) enabling the said shafts (41, 320) to be coupled by means of a first and second output shaft (720) and a bevel gear mechanism.

2. Device according to Claim 1, **characterized in that** the said spiral scraper (40) is made up of a central frame (401) in the form of a worm wound around the said support shaft (41) and fitted with flexible elements (400) along its outer edge.

3. Device according to Claim 1 or 2, **characterized in that** the said emptying device (3) comprises the said drive shaft (320) bearing a worm (32) and motorization means (30) which cause the said worm (32) to rotate about an approximately horizontal axis (ΔH), and **in that** the said emptying device (3) comprises a protective cowling surrounding the top of the said worm (32), having the approximate shape of an inverted "C" and forming a first rigid beam (31), the said worm (32) intercepting and transporting the bulk of the said first residual product volume (2') towards the said central orifice (102) during the said second extraction phase, leaving the said second final residual product volume (2") on the said bottom surface (101), in a so-called exit zone with respect to the direction of the said rotation about the said vertical axis (ΔV), in such a way that this said second residual product volume (2") is in turn intercepted by the said spiral scraper (40).

4. Device according to Claim 3, **characterized in that** the said drive shaft (41) bearing the said spiral scraper (40) is fitted with at least one intermediate bearing (441) which is mechanically secured to the said first rigid beam (31) by means of lateral support parts (440) and a flange (442) which surrounds all or part of the said rigid beam (31).

5. Device according to Claim 1, **characterized in that** the said coupling is achieved by means of a transmission chain (71) and gears (72-76), the said gears (72-76) causing the said drive shaft (320) bearing the said worm (32) to move in a clockwise direction and the said drive shaft (720) bearing the said spiral scraper (40) to move in an anticlockwise direction.

6. Device according to any one of Claims 3 to 5, **characterized in that** it also comprises a protective cowling surrounding the top of the said spiral scraper, having the approximate shape of an inverted "C" and forming a second rigid beam (42), and **in that** the said cowlings of the said first and second rigid beams (31, 42) are connected to one another, in an upper area, by a sealing element (5).

7. Device according to Claim 6, **characterized in that** the said cowling of the said second rigid beam (42) is fitted, in a lower area which is opposite the said first rigid beam (31), a so-called exit zone with respect to the direction of the said rotation about the said vertical axis (ΔV), with an auxiliary cleaning element comprising linear flexible elements (6) which sweep the said bottom surface (101) during the said rotation about this vertical axis (ΔV).

8. Device according to any one of Claims 3 to 7, **characterized in that** the said first beam (31) is fitted, at the end which is close to the said central area, with means (301-303) enabling oscillation about a horizontal axis (ΔH') in such a way as to enable adaptation to variations in the level of the said bottom surface (101) during the said rotation about the said vertical axis (ΔV).

9. Device according to Claim 8, **characterized in that** the said means enabling oscillation comprise two pairs of vertical lateral support parts (301-303) which are coupled by means of a shaft (302) enabling free rotation about the said horizontal axis (ΔH').

10. Device according to Claim 9, **characterized in that** the said drive shaft (41) bearing the said spiral scraper (40) is mechanically coupled to the said second output shaft (720) of the said gearbox (7) by means of an articulated transmission element (8).

11. Device according to Claim 10, **characterized in that** the said articulated transmission element is a Cardan joint (8).

12. Device according to Claim 11, **characterized in that** the end which is close to the said central area of the said drive shaft (41) bearing the said spiral scraper (40) is fitted with a worm element (80) fitted with means (84) for ejecting the said product (2") of the said second final residual volume towards the said central orifice (102).

13. Device according to any one of Claims 10 to 12, **characterized in that** the said articulated transmission element (8) is fitted with a protective cowling (83) having the approximate shape of an inverted "C".

## Patentansprüche

1. Vorrichtung zum Reinigen eines Silos (1) mit einem im Wesentlichen flachen Boden (101), das vorgesehen ist, um ein Produkt in der Art von Getreide oder Ähnlichem zu lagern, wobei das Silo (1) in der Bodenwand (101), in einem zentralen Bereich, eine Öffnung (102) aufweist, über die das Produkt während einer ersten Austragsphase imstande ist, durch gravitätsbedingten natürlichen Abfluss ausgetragen zu werden, unter Belassung eines ersten Rückstandvolumens (2') des Produktes auf der Bodenwand (101), wobei das Silo (1) mit einer sich um eine vertikale Achse (ΔV) drehenden, durch den zentralen Bereich durchgehenden Austragsvorrichtung (3) versehen ist, die während der Drehung über die Bodenwand (101) streicht, um den Hauptbestandteil des ersten Rückstandvolumens (2') des Produktes während einer zweiten Austragsphase aufzunehmen und zu der zentralen Öffnung (102) zu transportieren, unter Belassung eines zweiten, final genannten Rückstandvolumens (2") des Produktes auf der Bodenwand (101), wobei, verbunden mit der Austragsvorrichtung (3), um der Rotationsbewegung um die Vertikalachse (ΔV) zu folgen, die besagte Austragsvorrichtung (3) eine Welle (41), die einen spiralförmigen Schaber (40) trägt, der auf der Bodenwand (101) aufliegt, und Antriebsmittel aufweist, die der Tragwelle (41) und dem Schaber (40) eine Rotationsbewegung um eine im Wesentlichen horizontale Achse (ΔH4) aufzwingen, wobei die Rotationsrichtung dergestalt ist, dass der spiralförmige Schaber (40) das zweite Rückstandvolumen (2") des Produktes aufnimmt und durch die zentrale Öffnung (102) austrägt, um eine selbsttätige Reinigung der Bodenwand (101) und einen vollständigen Austrag des Produktes (2") zu erhalten, wobei die Austragsvorrichtung (3) weiter eine Antriebswelle (320) aufweist, die mit der Tragwelle (41) mittels mechanischer Gelenkmittel (8) verbunden ist, um eine Entkopplung zwischen den Wellen (41, 320) zu erhalten, wobei die Reinigungsvorrichtung **dadurch gekennzeichnet ist, dass** die erforderliche Antriebsleistung der Welle (41), die den spiralförmigen Schaber (40) aufweist, und der Welle (320), die die Schnecke (32) aufweist, durch gemeinsame Antriebsmittel (30) erwirkt ist, und dass die Antriebsmittel (30) mit einem Getriebegehäuse (7) gekoppelt sind, das eine Ankopplung der Wellen (41, 320) durch Zwischenschaltung einer ersten und einer zweiten Ausgangswelle (720) und eines Umkehrmechanismus ermöglicht.

2. Vorrichtung nach Anspruch 1, **dadurch gekennzeichnet, dass** der spiralförmige Schaber (40) aus einer zentralen Bewährung (401) in Form einer Schnecke, die um die Tragwelle (41) gewickelt ist, gebildet und außen mit nachgiebigen Elementen (400) versehen ist.

3. Vorrichtung nach Anspruch 1 oder 2, **dadurch gekennzeichnet, dass** die Austragsvorrichtung (3) die Antriebswelle (320) aufweist, die eine Schnecke (32) und Antriebsmittel (30) aufweist, die der Schnecke (32) eine Rotationsbewegung um eine im Wesentlichen horizontale Achse (ΔH) aufzwingt, und dass die Austragsvorrichtung (3) eine Schutzverkleidung aufweist, die die Schnecke (32) von oben her umhüllt, im Wesentlichen die Form eines umgekehrten "C" aufweisend, und einen ersten festen Träger (31) ausbildend, wobei die Schnecke (32) während der zweiten Austragsphase den Hauptbestandteil des ersten Rückstandvolumens (2") aufnimmt und zur zentralen Öffnung (102) transportiert, unter Belassung des zweiten, finalen Rückstandvolumens (2") des Produktes auf der Bodenwand (101), in einem besagten Ausgangsbereich mit Bezug auf die Drehrichtung um die vertikale Achse (ΔV), dergestalt, dass das zweite Rückstandvolumen (2") des Produkts durch den spiralförmigen Schaber (40) während seiner Umdrehung aufgenommen wird.

4. Vorrichtung nach Anspruch 3, **dadurch gekennzeichnet, dass** die Antriebswelle (41), die den spriralförmigen Schaber (40) aufweist, mit wenigstens einem Zwischenlager (441) versehen ist, das mechanisch mittels seitlicher Stützteile (440) und einer Lasche (442) an dem ersten festen Träger (31) befestigt ist, den festen Träger (31) ganz oder teilweise umgebend.

5. Vorrichtung nach Anspruch 1, **dadurch gekennzeichnet, dass** die Ankopplung durch eine Übertragungskette (71) und Zahnräder (72-76) erwirkt ist, wobei die Zahnräder (72-76) der Antriebswelle (320), die die Schnecke (32) aufweist, eine Bewegung in Uhrzeigerrichtung und der Abtriebswelle (720), die den spiralförmigen Schaber (40) aufweist, eine Bewegung entgegen der Uhrzeigerrichtung aufzwingt.

6. Vorrichtung nach einem der Ansprüche 3 bis 5, **dadurch gekennzeichnet, dass** sie ebenfalls eine Schutzverkleidung aufweist, die den spiralförmigen Schaber von oben her umgibt, im Wesentlichen die Form eines umgekehrten "C" aufweisend, und einen zweiten festen Träger (42) ausbildend, und dass die Verkleidungen des ersten und zweiten festen Trägers (31, 42) zwischen sich in einem oberen Bereich mittels eines Abdichtungselementes (5) verbunden sind.

7. Vorrichtung nach Anspruch 6, **dadurch gekennzeichnet, dass** die Verkleidung des zweiten festen Trägers (42) in einem unteren Bereich, gegenüberliegend dem ersten festen Träger (31), sprich dem Ende bzw. Ausgang bezüglich der Rotationsrichtung um die vertikale Achse (ΔV), mit einem zusätzlichen Reinigungselement versehen ist, das lineare, nachgiebige Elemente (6) aufweist, die während der Rotation um diese Vertikalachse (ΔV) über die Bodenwand (101) streichen.

8. Vorrichtung nach einem der Ansprüche 3 bis 7, **dadurch gekennzeichnet, dass** der erste Träger (31) an einem zum zentralen Bereich benachbarten Ende Mittel (301-303) aufweist, die Schwankungen um eine Horizontalachse (ΔH') ermöglicht, dergestalt, dass Höhenschwankungen der Bodenwand (101) während der Rotation um die Vertikalachse (ΔV) aufgenommen werden können.

9. Vorrichtung nach Anspruch 8, **dadurch gekennzeichnet, dass** die die Schwankungen ermöglichenden Mittel zwei Paare von vertikalen seitlichen Stützteilen (301-303) aufweisen, die mit einer Welle (302) gekoppelt sind, die freie Drehungen um die Horizontalachse (ΔH') ermöglichen.

10. Vorrichtung nach Anspruch 9, **dadurch gekennzeichnet, dass** die Antriebswelle (41), die den spiralförmigen Schaber (40) trägt, mechanisch mit der zweiten Ausgangswelle (720) des Getriebegehäuses (7) mittels Zwischenschaltung eines gelenkigen Übertragungselementes (8) gekoppelt ist.

11. Vorrichtung nach Anspruch 10, **dadurch gekennzeichnet, dass** das gelenkige Übertragungselement eine Kardanwelle (8) ist.

12. Vorrichtung nach Anspruch 11, **dadurch gekennzeichnet, dass** das Ende, das dem Zentralbereich der Antriebswelle (41), die den spiralförmigen Schaber (40) aufweist, benachbart ist, mit einer Schnecke (80) versehen ist, die mit Auswurfmitteln (84) des Produktes des zweiten, finalen Rückstandvolumens (2") auf die Öffnung (102) hin versehen ist.

13. Vorrichtung nach einem der Ansprüche 10 bis 12, **dadurch gekennzeichnet, dass** das gelenkige Übertragungselement (8) mit einer Schutzverkleidung (83) versehen ist, das im Wesentlichen die Form eines umgekehrten "C" aufweist.
